# EUROPÄISCHE PATENTANMELDUNG

(11) **EP 4 566 856 A1**
(43) Veröffentlichungstag der Anmeldung: **11.06.2025**
(21) Anmeldenummer: 23214903.9
(22) Anmeldetag: 07.12.2023
(51) Int. Cl.: B60J 7/06

(54) **SCHIEBEVERDECK MIT AUSSTEIFUNGSELEMENTEN**

(71) Anmelder: Schmitz Cargobull AG, 48341 Altenberge (DE)
(72) Erfinder: DERKS, Roger Geradus Christiaan, 5971 CK Grubbenvorst (NL); MENSING, Udo, 48612 Horstmar (DE); RAUSS, Niklas, 48432 Rheine (DE)
(74) Vertreter: Cohausz & Florack

(57) **Zusammenfassung**

Beschrieben und dargestellt ist ein Schiebeverdeck (7) für einen Planenaufbau (1) eines Nutzfahrzeugs (N), zum Aufschieben in eine das Dach (6) zum Be- und Entladen freigebende geöffnete Stellung und zum Zuschieben in eine das Dach (6) verschließende geschlossene Stellung, mit zwei seitlichen Längsholmen (8), einer Dachplane (13), wenigstens zwei sich unterhalb der Dachplane (13) zwischen den Längsholmen (8) erstrechenden, verfahrbaren, biegesteifen Spriegeln (14), wenigstens zwei sich unterhalb der Dachplane (13) zwischen den Längsholmen (8) erstreckenden, länglichen und biegeschlaffen Aussteifungselementen (16) und wenigstens einer abschnittsweise mit der Dachplane (13) verbundenen Haltestruktur (18), wobei die wenigstens eine Haltestruktur (18) wenigstens abschnittsweise unterhalb der wenigstens zwei Aussteifungselemente (16) angeordnet ist und die wenigstens zwei Aussteifungselemente (16) in der geöffneten Stellung gegenüber einem freien Herunterhängen in einen Laderaum (3) zwischen der Dachplane (13) und der Haltestruktur (18) hält und wobei die Aussteifungselemente (16) zwischen der Dachplane (13) und der Haltestruktur (18) wenigstens abschnittsweise unverbunden mit der Dachplane (13) und wenigstens abschnittsweise unverbunden mit der Haltestruktur (18) vorgesehen sind. Um eine einfachere und damit kostengünstigere Herstellung zu ermöglichen, ist vorgesehen, dass zwischen der wenigstens einen Haltestruktur (18) und der Dachplane (13) ein die wenigstens zwei Aussteifungselemente (16) wenigstens teilweise aufnehmender Funktionsraums (22) ausgebildet ist.

## Beschreibung

Die Erfindung betrifft ein Schiebeverdeck für einen Planenaufbau eines Nutzfahrzeugs, vorzugsweise Lastkraftwagen, Anhänger oder Sattelauflieger, zum Aufschieben in eine das Dach zum Be- und Entladen freigebende geöffnete Stellung und zum Zuschieben in eine das Dach verschließende geschlossene Stellung, mit zwei seitlichen Längsholmen, einer sich zwischen den Längsholmen und wenigstens teilweise über die Längsholme hinweg erstreckenden in die geöffnete Stellung und in die geschlossene Stellung verstellbaren Dachplane, wenigstens zwei sich unterhalb der Dachplane zwischen den Längsholmen erstrechenden, mit der Dachplane entlang den Längsholmen in die geöffnete Stellung und in die geschlossene Stellung verfahrbaren, biegesteifen Spriegeln, wenigstens zwei sich unterhalb der Dachplane zwischen den Längsholmen erstreckenden, mit der Dachplane in die geöffnete Stellung und in die geschlossene Stellung verstellbaren, länglichen und biegeschlaffen Aussteifungselemente, und wenigstens einer abschnittsweise mit der Dachplane verbundenen, mit der Dachplane in die geöffnete Stellung und in die geschlossene Stellung verstellbaren Haltestruktur, wobei die wenigstens eine Haltestruktur wenigstens abschnittsweise unterhalb der wenigstens zwei Aussteifungselemente angeordnet ist und die wenigstens zwei Aussteifungselemente in der geöffneten Stellung gegenüber einem freien Herunterhängen in einen Laderaum zwischen der Dachplane und der Haltestruktur hält und wobei die Aussteifungselemente zwischen der Dachplane und der Haltestruktur wenigstens abschnittsweise unverbunden mit der Dachplane und wenigstens abschnittsweise unverbunden mit der Haltestruktur vorgesehen sind. Ferne betrifft die Erfindung einen Planenaufbau eines Nutzfahrzeugs, vorzugsweise Lastkraftwagen, Anhänger oder Sattelauflieger, mit einem Schiebeverdeck zum Aufschieben in eine das Dach zum Be- und Entladen freigebende geöffnete Stellung und zum Zuschieben in eine das Dach verschließende geschlossene Stellung.

Nutzfahrzeuge der genannten Art, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet.

Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren oder ein Rolltor gebildet wird, um den Laderaum bedarfsweise von hinten zu beladen. Wenn eine Plane entlang der Seitenwand verschoben werden kann, spricht man auch von sogenannten Curtainsidern.

Das Dach von Planenaufbauten weist typischerweise seitlich angeordnete Holmstrukturen in Form von Längsholmen auf, die unter Bildung einer Rahmenstruktur quer zum Nutzfahrzeug über Spriegel miteinander verbunden sind. Zudem sind der Stirnwand und der Rückwand zugeordnet Querträger vorgesehen, welche die Längsholme miteinander verbinden. Die Rahmenstruktur trägt dann die das Dach verschließende Dachplane. Um das Be- und Entladen des Laderaums durch eine Dachöffnung zu ermöglichen, weisen Planenaufbauten, insbesondere Curtainsider, regelmäßig sogenannte Schiebeverdecke auf. Bei den Schiebeverdecken sind die Spriegel über Laufwagen an den Längsholmen gehalten und in Längsrichtung des Nutzfahrzeugs gegenüber den Längsholmen verschiebbar vorgesehen.

Zum Be- oder Entladen kann das Dach aus seiner geschlossenen Stellung geöffnet werden, in dem zunächst die Flügeltüren der Rückwand geöffnet werden, um sodann einen Abschlussbügel von der geschlossenen Stellung in die geöffnete Stellung zu verstellen, der in der geschlossenen Stellung den hinteren Querträger sowie die Längsholme hintergreift. Das Schiebeverdeck kann nun nach vorne in eine geöffnete Stellung geschoben werden, wobei die Spriegel und die mit den Spriegeln verbundene Dachplane entlang der Längsholme in die entsprechende Richtung verstellt werden. Die Spriegel bleiben dabei in der Ebene der Längsholme angeordnet, rücken aber näher aneinander. Die Dachplane wird dagegen Falten werfen und so teilweise über die Längsholme nach oben überstehen. Um das Schiebeverdeck wieder zu schließen, wird dieses zusammen mit den Spriegeln und der Dachplane wieder nach hinten in die geschlossene Stellung gezogen, wo der Abschlussbügel wieder hinter die Längsholme und den hinteren Querholm umgelegt wird.

Da Schiebeverdecke es ermöglichen sollen, einfach zwischen der geöffneten und der geschlossenen Stellung hin und her verstellt zu werden, steifen Schiebeverdecke den Planenaufbau nicht so sehr aus, wie dies bei festen, nicht zu öffnende Dächern der Fall ist. Um diesem Nachteil Rechnung zu tragen, weisen Schiebeverdecke oftmals sogenannte Aussteifungselemente auf, die typischerweise längliche und biegeschlaffe Elemente sind, die jedoch auf Zug belastet werden können, ohne sich dabei nennenswert zu dehnen bzw. zu längen. Meist handelt es sich dabei um Stahlseile oder Gurte, die über Laufwagen an den Längsholmen angeschlagen und unterhalb der Dachplane vorgesehen sind. Die Aussteifungselemente sollen das Öffnen des Schiebeverdecks nicht behindern und beim Schließen des Schiebeverdecks zwangsweise mehr oder weniger strammgezogen werden. So können die Aussteifungselemente einem Verwinden des Planenaufbaus entgegenwirken.

Damit die Aussteifungselemente, die oftmals nicht mit der Dachplane verbunden sind, in der geöffneten Stellung des Schiebeverdecks nicht nach unten in den Laderaum hängen, wo sie das Be- und/oder Entladen behindern oder sich gar in der Ladung verfangen könnten, erstrecken sich die Aussteifungselemente meist in jeweils einem Tunnel an der Unterseite der Dachplane. Die Tunnel werden dabei in der Regel durch die Dachplane und einen Kunststoffstreifen gebildet, welche mit seinen Längsrändern mit der Dachplane verbunden ist. Die Aussteifungselemente sind dabei lose in den Tunneln geführt. Aus den Längsenden der Tunnel ragen jeweils die Längsenden eines Aussteifungselements hervor, das mit seinen freien Enden über Spriegel und/oder Laufwagen an den Längsholmen festgelegt ist. Wird das Schiebeverdeck geöffnet bleiben die Aussteifungselemente in den Tunneln direkt unterhalb der Dachplane gehalten. Aussteifungselementen, deren freie Enden vorne, nahe der Stirnwand vorgesehen sind, können auch direkt an den Längsholmen festgelegt sein, da dies ein Öffnen des Schiebeverdecks nach vorne nicht beeinträchtig.

Dieses Vorgehen hat sich bewährt, erfordert aber einen erhöhten Aufwand bei der Herstellung des Schiebedachs. Aus diesem Grund ist bereits vorgeschlagen worden, die Aussteifungselemente in die Dachplane zu integrieren, was aber die Herstellung der Dachplane aufwendiger werden lässt und nicht zu den gewünschten Eigenschaften führt.

Daher liegt der vorliegenden Erfindung die Aufgabe zugrunde, das Schiebeverdeck und den Planenaufbau jeweils der eingangs genannten und zuvor näher erläuterten Art derart auszugestalten und weiterzubilden, dass eine einfachere und damit kostengünstigere Herstellung ermöglicht wird.

Dies Aufgabe ist bei einen Schiebeverdeck nach dem Oberbegriff des Anspruchs 1 dadurch gelöst, dass zwischen der wenigstens einen Haltestruktur und der Dachplane ein die wenigstens zwei Aussteifungselemente wenigstens teilweise aufnehmender Funktionsraums ausgebildet ist.

Die genannte Aufgabe ist ferner bei einem Planenaufbau nach dem Oberbegriff von Anspruch 13 dadurch gelöst, dass das Schiebeverdeck nach einem der Ansprüche 1 bis 12 ausgebildet ist.

Während die Aussteifungselemente bei den vorbekannten Schiebeverdecken jeweils in einem separaten Tunnel vorgesehen sind, bildet die Haltestruktur erfindungsgemäß zusammen mit der Dachplane zwischeneinander einen Funktionsraum aus, in dem wenigstens zwei unterschiedliche Aussteifungselemente wenigstens teilweise aufgenommen sind. Es ist also nicht erforderlich für jedes Aussteifungselement einen separaten Tunnel vorzusehen. Vielmehr kann die Haltestruktur so großflächig gewählt und abschnittsweise mit der Dachplane verbunden werden, dass dadurch ein Zwischenraum zwischen der Dachplane und der Haltestruktur geschaffen wird, in den sich problemlos wenigstens zwei unterschiedliche Aussteifungselemente einziehen lassen.

Dabei erstrecken sich die Aussteifungselemente vorzugsweise auch nicht parallel und nebeneinander, um unterschiedliche Bereiche des Schiebeverdecks in unterschiedlicher Weise auszusteifen. Mit anderen Worten können die wenigstens zwei Aussteifungselemente vorzugsweise mit jeweils wenigstens einem freien Ende mit unterschiedlichen Spriegeln und/oder Laufwagen verbunden sein, wobei die wenigstens zwei Aussteifungselemente nicht parallel zueinander, sondern in einem deutlich unterschiedlichen Winkel zu den Längsholmen verlaufen können. Dies wird dadurch begünstigt, dass die Haltestruktur und die Dachplane lediglich abschnittsweise miteinander verbunden sind. Die Orte, an denen die Haltestruktur und die Dachplanen miteinander verbunden sind, können dabei so gewählt werden, dass der Funktionsraum an den gewünschten Stellen Aussteifungselemente in gewünschten Ausrichtungen aufnehmen könne, ohne dass die Aussteifungselement und die Verbindungsbereiche zwischen Dachplane und Haltestruktur miteinander kollidieren. Die Aussteifungselemente können dann mehr oder weniger lose durch den Funktionsraum verlaufen, was das Öffnen und Schließen des Schiebeverdecks vereinfachen kann.

Durch ein lediglich abschnittsweises Verbinden der Haltestruktur an der Dachplane bilden sich bedarfsweise verschiedene Kanäle oder verschieden Kanalabschnitte aus, durch die die Aussteifungselemente an unterschiedlichen Stellen und bedarfsweise auch in unterschiedliche Richtungen durch den Funktionsraum gezogen werden können. Dabei wird es bevorzugt sein, wenn die Kanäle seitlich nur abschnittsweise geschlossen sind, da die Kanäle die Aussteifungselemente nicht oder nur geringfügig führen müssen, anders als dies bei den aus dem Stand der Technik bekannten Tunneln der Fall ist. Die abschnittsweise Verbindung der Haltestruktur mit der Dachplane dient nämlich vorzugsweise weniger dem Führen der Aussteifungselemente oder dem Ausbilden von überwiegend geschlossenen Kanälen, sondern insbesondere dazu, die Haltestruktur und damit letztlich auch die Aussteifungselement benachbart zur Dachplane zu halten und ein übermäßiges Herunterhängen von Haltestruktur und Aussteifungselementen in den darunter vorgesehenen Laderaum des Planenaufbaus bei geöffnetem Schiebeverdeck zu vermeiden.

Bei einer ersten besonders bevorzugten Ausgestaltung des Schiebeverdecks sind die Aussteifungselemente zwischen der Dachplane und der Haltestruktur wenigstens abschnittsweise unverbunden mit der Dachplane und wenigstens abschnittsweise unverbunden mit der Haltestruktur vorgesehen. Die Aussteifungselemente können sich dann relativ frei in dem Funktionsraum zwischen der Dachplane und der Haltestruktur bewegen, insbesondere wenn das Schiebeverdeck geöffnet und wieder geschlossen wird. Das Öffnen und das Schließen des Schiebeverdecks wird mithin nicht oder nur geringfügig durch die Aussteifungselemente beeinträchtigt. Zudem wird ermöglicht, dass die Aussteifungselemente bei geschlossenem Schiebeverdeck so ausgerichtet und gespannt sind, dass die Aussteifungselemente das Schiebeverdeck und damit den Planenaufbau aussteifen können.

Besonders bevorzugt wird es jedoch sein, wenn die wenigstens zwei Aussteifungselemente wenigstens zwischen der Dachplane und der Haltestruktur unverbunden mit der Dachplane und/oder unverbunden mit der Haltestruktur vorgesehen sind. Die Aussteifungselemente können sich dann entsprechend frei in dem Funktionsraum zwischen der Dachplane und der Haltestruktur bewegen, insbesondere wenn das Schiebeverdeck geöffnet und geschlossen wird. Das Öffnen und das Schließen des Schiebeverdecks wird mithin nicht durch die Aussteifungselemente beeinträchtigt. Zudem wird sichergestellt, dass die Aussteifungselemente bei geschlossenem Schiebeverdeck so ausgerichtet und gespannt sind, dass die Aussteifungselemente das Schiebeverdeck und damit den Planenaufbau aussteifen können. Da die Aussteifungselemente in dem Funktionsraum zuverlässig gehalten werden können, ist in diesem Falle eine feste Verbindung zwischen den Aussteifungselementen und der Dachplane und/oder der Haltestruktur im Funktionsraum entbehrlich.

Um die Aussteifungselemente so an die Längsholme anbinden zu können, dass Zugkräfte von den Aussteifungselementen aufgenommen werden können, bietet es sich an, wenn die wenigstens zwei Aussteifungselemente an ihren freien Enden gegenüber dem Funktionsraum jeweils in Richtung eines der Längsholme vorstehen. Das Anbinden der Aussteifungselemente an die Längsholme muss also nicht innerhalb des Funktionsraums erfolgen. Außerhalb des Funktionsraums ist die entsprechende Anbindung einfacher, schneller und kostengünstiger zu bewerkstelligen. Die freien Enden der Aussteifungselemente können ferner bevorzugt direkt oder indirekt mit dem Spriegel oder einen Laufwagen verbunden sein. In besonderen Fällen, insbesondere vorne am Schiebeverdeck, kann es zweckmäßig sein, die freie Enden von Aussteifungselementen direkt an einem Längsholm festzulegen.

Dabei kann es zur einfachen, schnellen, flexiblen und kostengünstigen Herstellung des Schiebeverdecks ferner zweckmäßig sein, wenn der Funktionsraums zwischen der wenigstens einen Haltestruktur und der Dachplane dazu ausgebildet ist, die wenigstens zwei Aussteifungselemente nach der Ausbildung des Funktionsraums durch den Funktionsraum hindurchzuführen. Dann müssen die Aussteifungselemente nicht vor dem abschnittsweisen Festlegen der Haltestruktur an der Dachplane in dem Funktionsraum aufgenommen sein. Dies kann einfach zu einem späteren Zeitpunkt erfolgen. So kann beispielsweise auch erst unmittelbar vor der Montage eines Schiebeverdecks festgelegt werden, wie viele Aussteifungselemente im Funktionsraum aufgenommen werden sollen und/oder in welchen Richtungen sich die Aussteifungselemente durch den Funktionsraum erstrecken sollen. Beides kann von Planenaufbau zu Palenaufbau je nach den jeweiligen Einsatzzwecken stark variieren. Es müssen so nicht unterschiedliche Schiebeverdecke für jeden Einsatzzweck vorgehalten werden. Es reicht aus, vor der Montage des Schiebeverdecks die gewünschte Anzahl an Aussteifungselementen an den gewünschten Stellen durch den Funktionsraum zu ziehen.

Der erfindungsgemäße Vorteil kommt in vielen Fällen besonders zum Tragen, wenn mehr als zwei Aussteifungselemente in dem einen Funktionsraum zwischen der Dachplane und der wenigstens einen Haltestruktur aufgenommen sind. Es können beispielsweise wenigstens drei Aussteifungselemente, vorzugsweise wenigstens vier Aussteifungselemente, insbesondere wenigstens sechs Aussteifungselemente, vorgesehen sein. Je mehr Aussteifungselemente in dem Funktionsraum vorgesehen sind, desto weniger separate Haltestrukturen und Funktionsräume müssen verteilt über die Länge und/oder die Breite des Schiebeverdecks vorgesehen sein, wenn eine bestimmte Anzahl von Aussteifungselementen zur hinreichenden Aussteifung des Schiebeverdecks gefordert werden.

Der Einfachheit halber bietet es sich an, wen die Aussteifungselemente Gurte, Fäden, Seile und/oder Drähte sind. Gurte sind dabei besonders flach und können gleichwohl hohe Zugkräfte aufnehmen. Dafür sind Gurte recht breit, was das Hindurchführen durch den Funktionsraum erschweren kann und/oder mehr Platz im Funktionsraum benötigt. Seile, insbesondere Stahlseile, sind zwar bedarfsweise dünner, aber oft auch weniger biegeschlaff als Gurte, was das Öffnen und Schließen des Schiebeverdecks behindern kann. Einzelne Fäden benötigen nicht viel Platz können sich aber unter Umständen leicht verheddern. Für Drähte gilt je nach Ausgestaltung der Drähte ähnliches wie für Seile und Fäden. Unabhängig davon können die Aussteifungselemente wenigstens überwiegend, insbesondere wenigstens im Wesentlichen, aus Polyerster gebildet sein. So sind die Aussteifungselemente feuchtigkeitsresistent und unter Zugbelastung zugleich sehr formstabil.

Wenn die wenigstens eine Haltestruktur flächig, vorzugsweise großflächig, ausgebildet ist, kann diese unter einem entsprechend groben Teilbereich der Dachplane angeordnet sein und dort einen entsprechend breiten und/oder langen Funktionsraum bereitstellen, in dem unterschiedliche Aussteifungselemente in unterschiedlichen Richtungen und an unterschiedlichen Stellen angeordnet werden können. Um etwaiges Kondenswasser ablaufen zu lassen, das sich in dem Funktionsraum bilden kann, bietet es sich an, wenn die wenigstens eine Haltestruktur durch ein Netz gebildet ist oder wenigstens eine Reihe von Öffnungen aufweist. Einfacher in der Handhabung und zum Verbinden mit der Dachplane kann es dagegen unter Umständen sein, wenn eine Folie und/oder eine Plane als Haltestruktur verwendet wird. Diese kann dann bedarfsweise eine Reihe von Öffnungen aufweisen, die das Abtropfen von Kondenswasser aus dem Funktionsraum erlauben.

Um von dem Funktionsraum sehr flexibel und erst kurz vor der Montage des Schiebeverdecks Gebrauch machen zu können, ist es zweckmäßig, wenn die wenigstens eine Haltestruktur sich wenigstens über 70 %, vorzugsweise über wenigstens 80 %, insbesondere über wenigstens 90 %, weiter insbesondere wenigstens im Wesentlichen über den gesamten Abstand zwischen den Längsholmen erstreckt. Dann kann beispielsweise eine Haltestruktur in einer Richtung quer zum Schiebeverdeck ausreichend sein.

Unabhängig davon kann es aus demselben Grund bevorzugt sein, wenn die wenigstens eine Haltestruktur sich in der geschlossenen Stellung des Dachs wenigstens über 20 %, vorzugsweise über wenigstens 30 %, insbesondere über wenigstens 50 %, weiter insbesondere über wenigstens 90 % der Längserstreckung des Laderaums erstreckt. Dann kann beispielsweise eine Haltestruktur in einer Richtung längs zum Schiebeverdeck ausreichend sein.

Eine einfache und zugleich sichere sowie langlebige Verbindung zwischen der Haltestruktur und der Dachplane kann erreicht werden, wenn die wenigstens eine Haltestruktur abschnittsweise mit der Dachplane verschweißt, vernäht, verklebt, vernietet und/oder verschraubt ist. Die jeweils am meisten bevorzugte Option ergibt sich dabei anhand der verwendeten Materialen und deren Eigenschaften hinsichtlich des Fügens. Unabhängig davon ist jedoch anzumerken, dass ein direktes Verbinden von Dachplane und Haltestruktur der Einfachheit halber bevorzugt sein kann, aber nicht zwingend vorgesehen sein muss. Auch hier hängt die am meisten bevorzugte Ausgestaltung der Fügeverbindungen von den jeweiligen Randbedingungen ab, die bei verschiedenen Schiebeverdecken sehr unterschiedlich sein können.

In einigen Fällen kann es besonders bevorzugt sein, wenn die wenigstens eine Haltestruktur im Bereich und/oder zusammen mit Riemenhalteplatten mit der Dachplane verschweißt, vernäht, verklebt, vernietet und/oder verschraubt ist. Riemenplatten sind oft ohnehin erforderlich, um die Dachplane mit Spriegeln zu verbinden, was bei der Verwendung von Riemenplatten bevorzugt jeweils über Riemen erfolgt, die sich durch oder um den Plattenabschnitt der Riemenplatte und durch oder um die entsprechenden Spriegel erstrecken. Riemenplatten bestehen in der Regel aus einem Plattenabschnitt aus Kunststoff und einem Riemen, der an der Riemenplatte gehalten und um einen Spriegel herumgeschnallt werden kann, um die Dachplane über die Riemenplatte mit dem Spriegel zu verbinden.

Im Bereich der Riemenplatte ist es ohnehin nicht oder nur sehr eingeschenkt möglich, ein Aussteifungselement durch den Funktionsraum zu ziehen. Mithin können diese Bereiche des Schiebeverdecks auch zweckmäßig dazu genutzt werden, die Haltestruktur an der Dachplane anzubinden. Dies gilt insbesondere dann, wenn die Haltestruktur zusammen mit der Riemenplatte an der Dachplane festgelegt ist. Dies kann einfach und zweckmäßig erfolgen, in dem die Haltestruktur im Bereich der Riemenplatten zwischen den Riemenplatten und der Dachplane angeordnet wird. In diesem Zusammenhang bietet es sich der Einfachheit halber zudem an, wenn die Riemenplatte, die Haltestruktur und die Dachplane jeweils in einem Schweißvorgang miteinander verschweißt sind, wobei sich insbesondere ein Hochfrequenzschweißen anbietet. Ein Vernähen, Verkleben, Vernieten und/oder Verschrauben ist aber ebenfalls, bedarfsweise ergänzend, denkbar.

Zur Aussteifung des Schiebeverdecks ist es zweckmäßig, wenn die Aussteifungselemente zwischen den Längsholmen mehr oder weniger "diagonal" verlaufen. Es kann sich daher bevorzugt anbieten, wenn sich die Aussteifungselemente in einem Winkel zwischen 15° und 75°, vorzugsweise zwischen 25° und 65°, insbesondere zwischen 35° und 55°, zu den Längsholmen erstrecken.

Nachfolgend wird die Erfindung anhand einer lediglich ein Ausführungsbeispiel darstellenden Zeichnung näher erläutert. In der Zeichnung zeigt
- Fig. 1: ein von einer Zugmaschine gezogenes Nutzfahrzeug mit einem erfindungsgemäßen Planenaufbau in einer perspektivischen Ansicht,
- Fig. 2: das erfindungsgemäße Schiebeverdeck des Planenaufbaus aus Fig. 1 in einer schematischen Ansicht von unten und
- Fig. 3: ein Detail des Schiebverdecks aus Fig. 2 in einer Schnittansicht entlang der Schnittebene III-III aus Fig. 2.

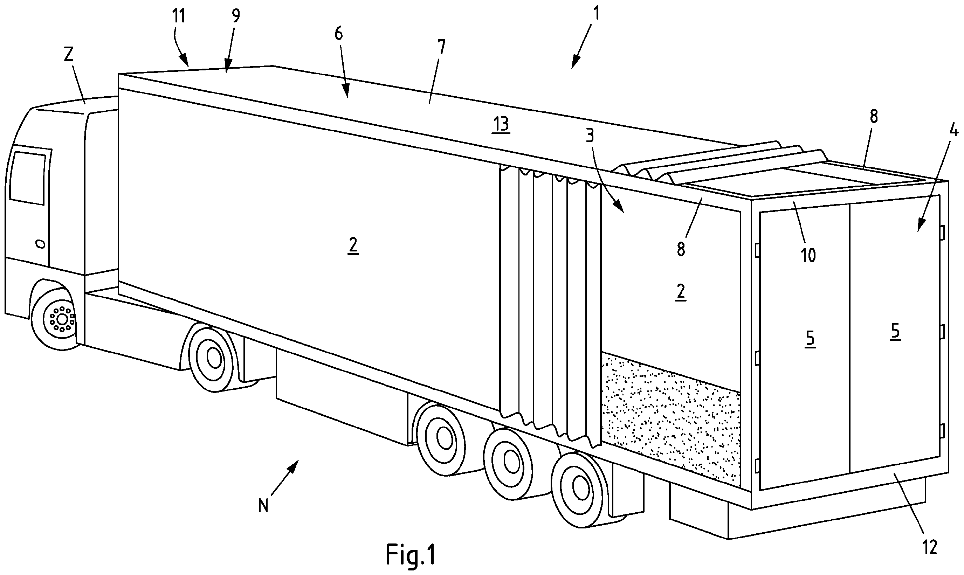

In der Fig. 1 ist ein Nutzfahrzeug N in Form eines von einer Zugmaschine Z gezogenen Sattelaufliegers dargestellt, das einen Planenaufbau 1 trägt. Bei dem Planenaufbau 1 handelt es sich um einen Curtainsider-Aufbau, bei dem die Seitenplanen 2 in Längsrichtung des Nutzfahrzeugs N zum Zwecke des Be- und/oder Entladens des Planenaufbaus 1 seitlich auf und wieder zu gezogen werden können. Zum Zwecke des Be- und/oder Entladens des Laderaums 3 des Planenaufbaus 1 von hinten sind in der Rückwand 4 zwei Rückwandtüren 5 im Sinne von Flügeltüren vorgesehen. Zum Be- und/oder Entladen des Laderaums 3 des Planenaufbaus 1 von oben ist das Dach 6 durch ein Schiebeverdeck 7 gebildet, das sich aus einer das Dach 6 verschließenden hinteren, geschlossenen Stellung in eine das Dach 6 teilweise öffnende vordere, geöffnete Stellung und wieder zurück entlang von seitlichen Längsholmen 8 verstellen lässt. Nach vorne und nach hinten wird das Schiebeverdeck 7 durch Querholme 9,10 der vor deren Stirnwand 11 und des die Rückwandtüren 5 aufnehmenden Rückwandrahmens 12 abgeschlossen. Das Schiebeverdeck 7 trägt an seinem oberen Ende eine Dachplane 13, die sich beim Öffnen des Schiebeverdecks 7 zusammenfaltet und sich seitlich über die Längsholme 8 erstreckt.

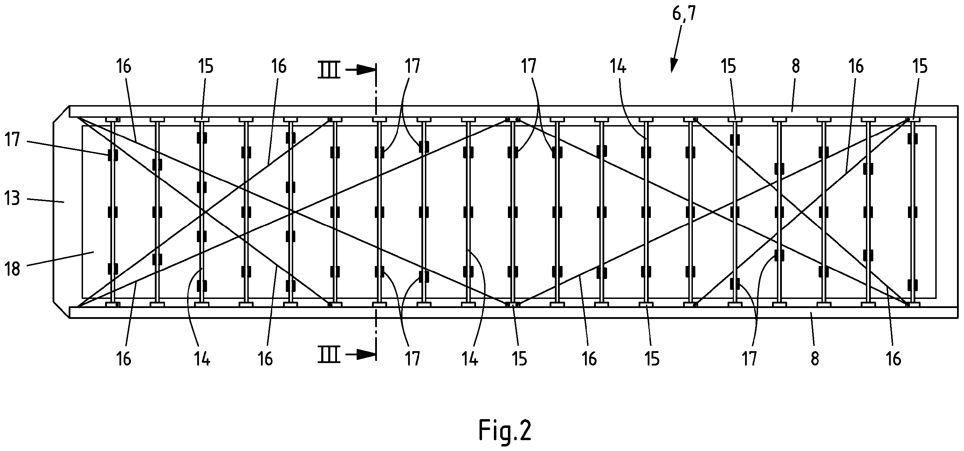

In der Fig. 2 ist das Schiebeverdeck 7 von unten dargestellt. In der Längsrichtung des Schiebeverdecks 7 erstrecken sich die Längsholme 8, während sich quer dazu an den beiden Enden gegenüberliegenden Enden des Schiebeverdecks 7 die Querholme 9,10 von Rückwandrahmen 12 und Stirnwand 11 erstrecken. Dazwischen erstrecken sich zudem quer zu den Längsholmen 8 Spriegel 14, die aus biegesteifen Streben, vorzugsweise aus Aluminium, gebildet sind und mit ihren gegenüberliegenden Enden an Laufwangen 15 festgelegt sind, welche ihrerseits längsverschiebbar an den Längsholmen 8 gehalten sind. Die Spriegel 14 werden beim Öffnen und Schließen des Schiebeverdecks 7 mit den Laufwagen 15 entlang der Längsholme 8 nach vorne und wieder nach hinten verfahren. Zur Aussteifung des Schiebverdecks 7 sind zudem noch Aussteifungselemente 16 in Form von Seilen, insbesondere Stahlseilen, vorgesehen, die sich mehr oder weniger diagonal zum Schiebeverdeck 7 wenigstens im Wesentlichen von einem Längsholm 8 zum gegenüberliegenden Längsholm 8 erstrecken. Es könnten anstelle von oder zusätzlich zu Seilen auch Gurte oder andere biegeschlaffe, auf Zug belastbare Aussteifungselemente vorgesehen sein.

Die vorderen Enden der vier vorderen Aussteifungselemente 16 sind bei dem dargestellten und insoweit bevorzugten Schiebeverdeck 7 direkt an den Längsholmen 8 festgelegt. Erforderlich ist dies aber ebenso wenig wie die Anzahl der Aussteifungselemente 16 des dargestellten und insoweit bevorzugten Schiebeverdecks 7. Die hinteren Enden der vorderen vier Aussteifungselemente 16 sind ebenso wie die freien Enden der übrigen Aussteifungselemente 16 entweder an einem Spriegel 14 oder einem einem Spriegel 14 zugeordneten Laufwagen 15 festgelegt. Zudem sind die Spriegel 14 noch mehr oder weniger punktweise über Riemenplatten 17 an die Dachplane 13 angebunden, die so über die Dachplane 13 verteilt angeordnet sind, dass sie einerseits in Überdeckung mit einem Spriegel 14 und hinreichend beabstandet von den Aussteifungselementen 16 sind, so dass es beim Öffnen und Schließen des Schiebverdecks 7 nicht zu einer Behinderung der Aussteifungselemente 16 durch die Riemenplatten 17 kommt. Daher sind die Abstände der Riemenplatten 17 untereinander nicht einheitlich, sondern variieren je nach dem Verlauf der Aussteifungselemente 16. Werden unterschiedliche Spriegel 14 verglichen, können die Abstände von Riemenplatten 17 eines Spriegels 14 von den entsprechenden Abständen von Riemenplatten 17 eines anderen Spiegels 14 stark voneinander abweichen. Zwingend erforderlich ist dies aber nicht.

Damit die Aussteifungselemente 16 bei geöffnetem Schiebeverdeck 7 nicht lose in den Laderaum 3 unterhalb des Schiebeverdecks 7 herunterhängen, ist auf der der Dachplane 13 abgewandten Seite der Aussteifungselemente 16, also auf der dem Laderaum 3 zugewandten Seite der Aussteifungselemente 16 eine Haltestruktur 18 vorgesehen, die sich bei dem dargestellten und insoweit bevorzugten Schiebverdeck 7 fast über die gesamte Länge und fast über die gesamte Breite der Dachplane 13 zwischen den Längsholmen einerseits und den Querholmen 9,10 andererseits erstreckt. Die Haltestruktur 18 erstreckt sich dabei in der Blickrichtung hinter den Spriegeln 14 und hinter den Riemenplatten 17, aber vor den Aussteifungselementen 16. Der besseren Übersichtlichkeit halber sind die Aussteifungselemente 16 in der Fig. 2 dennoch nicht als Unsichtbare, sondern als durchgehende Linien dargestellt. Ferner ist der besseren Übersicht halber nicht dargestellt, dass in der Haltestruktur 18 über deren Breite und deren Länge verteilt eine Vielzahl von Öffnungen vorgesehen ist, durch die Kondenswasser nach unten abtropfen kann. Die Haltestruktur 18 kann mithin auch als Gitterstruktur oder Mesh ausgebildet sein.

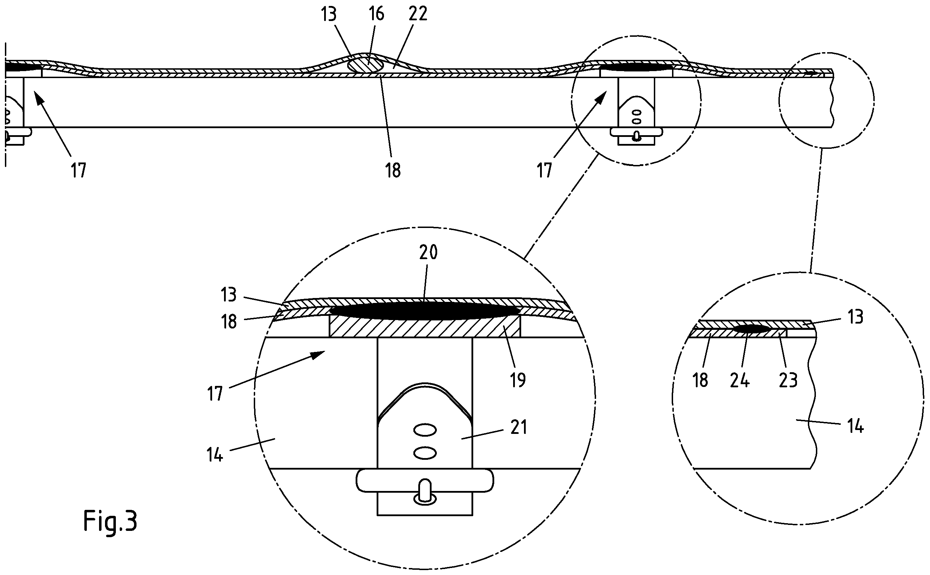

In der Fig. 3 ist ein Detail des Schiebeverdecks 7 in einem Querschnitt in Blickrichtung unmittelbar vor einem Spriegel 14 dargestellt, so wie dies als Schnittebene III-III in der Fig. 2 dargestellt ist. Der obere Abschluss des Schiebeverdecks 7 wird dabei von der Dachplane 13 gebildet. Unterhalb der Dachplane 13 ist die Haltestruktur 18 großflächig vorgesehen. Zwischen der Haltestruktur 18 und der Dachplane 13 sind die Aussteifungselemente 16 aufgenommen, die mittels der Haltestruktur 18 angrenzend an der Dachplane 13 gehalten werden, so dass die Aussteifungselemente 16 beim geöffneten Schiebeverdeck 7 nicht lose und weit in den Laderaum 3 unterhalb des Schiebeverdecks 7 herunterhängen, wo sie das Be- und/oder Entladen beeinträchtigen könnten und sich bedarfsweise in der Ladung verfangen könnten. Unterhalb der Haltestruktur 18 und unterhalb der Aussteifungselemente 16 sind die Spriegel 14 vorgesehen, so dass die Aussteifungselemente 16 insbesondere bei geöffnetem Schiebeverdeck 7 auch durch die Spriegel 14 in der Nähe der Dachplane 13 gehalten werden.

Die Spriegel 14 sind über Riemenplatten 17 mit der Dachplane 13 und der Haltestruktur 18 verbunden. Bei dem dargestellten und insoweit bevorzugten Schiebeverdeck 7 sind die Dachplane 13, die Haltestruktur 18 und der Plattenabschnitt 19 der Riemenplatte 17 über eine Verschweißung 20 miteinander verschweißt, und zwar im Wege des Hochfrequenzschweißens. Diese Verbindung ist in einer Detailansicht vergrößert dargestellt. Von dem Plattenabschnitt 19 der Riemenplatte 17 erstreckt sich ein Riemen 21 nach unten, dessen beide Enden um den Spriegel 14 herumgeführt und dort miteinander verbunden sind.

Die Aussteifungselemente 16 können sich in einem Funktionsraum 22, der sich zwischen der Dachplane 13 und der Haltestruktur 18 außerhalb der Verbindungsabschnitte bzw. Verschweißung von Dachplane 13 und Haltestruktur 18 mit den Riemenplatten 17 erstreckt, frei bewegen. Die Aussteifungselemente 16 sind bei dem dargestellten und insoweit bevorzugten Schiebeverdeck 7 weder mit der Dachplane 13 noch mit der Haltestruktur 18 verbunden. Die Aussteifungselemente 16 können daher auch einfach in den Funktionsraum 22 eingezogen, aus dem Funktionsraum 22 herausgezogen und/oder ausgetauscht werden. Die ist sogar nict der Montage des Schiebeverdecks 7 am Planenaufbau 1 möglich. Denkbar wäre es aber auch, die Aussteifungselemente 16 mit der Dachplane 13 und/oder der Haltestruktur 18 zu verbinden. Denkbar wäre es zusätzlich oder alternativ auch, die Dachplane 13 abseits von Riemenplatten 17 mit der Haltestruktur 18 zu verbinden, insbesondere zu verschweißen, also bedarfsweise unabhängig von einem gemeinsamen Verschweißen von Dachplane 13 und Haltestruktur 18 im Bereich der Riemenplatten 17. Bei dem dargestellten und insoweit bevorzugten Schiebeverdeck 7 wird der seitliche Rand 23 der Haltestruktur 18 punktweise über Punktschweißungen 24 mit der Dachplane 13 verschweißt, so dass der seitliche Rand 23 nicht in unerwünschtem Maß nach unten durchhängen kann, insbesondere bei geöffnetem Schiebeverdeck 7. Diese Verbindung ist in einer Detailansicht vergrößert dargestellt. Der Rand 23 könnte aber auch beispielsweise durch Längsnähte mit der Dachplane 13 verschweißt sein.

### Bezugszeichenliste

- 1: Planenaufbau
- 2: Seitenplane
- 3: Laderaum
- 4: Rückwand
- 5: Rückwandtür
- 6: Dach
- 7: Schiebeverdeck
- 8: Längsholm
- 9: Querholm
- 10: Querholm
- 11: Stirnwand
- 12: Rückwandrahmen
- 13: Dachplane
- 14: Spriegel
- 15: Laufwangen
- 16: Aussteifungselement
- 17: Riemenplatte
- 18: Haltestruktur
- 19: Plattenabschnitt
- 20: Verschweißung
- 21: Riemen
- 22: Funktionsraum
- 23: Rand
- 24: Punktschweißung
- N: Nutzfahrzeug
- Z: Zugmaschine

## Patentansprüche

1. Schiebeverdeck (7) für einen Planenaufbau (1) eines Nutzfahrzeugs (N), vorzugsweise Lastkraftwagen, Anhänger oder Sattelauflieger, zum Aufschieben in eine das Dach (6) zum Be- und Entladen freigebende geöffnete Stellung und zum Zuschieben in eine das Dach (6) verschließende geschlossene Stellung, mit zwei seitlichen Längsholmen (8), einer sich zwischen den Längsholmen (8) und wenigstens teilweise über die Längsholme (8) hinweg erstreckenden in die geöffnete Stellung und in die geschlossene Stellung verstellbaren Dachplane (13), wenigstens zwei sich unterhalb der Dachplane (13) zwischen den Längsholmen (8) erstrechenden, mit der Dachplane (13) entlang den Längsholmen (8) in die geöffnete Stellung und in die geschlossene Stellung verfahrbaren, biegesteifen Spriegeln (14), wenigstens zwei sich unterhalb der Dachplane (13) zwischen den Längsholmen (8) erstreckenden, mit der Dachplane (13) in die geöffnete Stellung und in die geschlossene Stellung verstellbaren, länglichen und biegeschlaffen Aussteifungselementen (16) und wenigstens einer abschnittsweise mit der Dachplane (13) verbundenen, mit der Dachplane (13) in die geöffnete Stellung und in die geschlossene Stellung verstellbaren Haltestruktur (18), wobei die wenigstens eine Haltestruktur (18) wenigstens abschnittsweise unterhalb der wenigstens zwei Aussteifungselemente (16) angeordnet ist und die wenigstens zwei Aussteifungselemente (16) in der geöffneten Stellung gegenüber einem freien Herunterhängen in einen Laderaum (3) zwischen der Dachplane (13) und der Haltestruktur (18) hält und wobei die Aussteifungselemente (16) zwischen der Dachplane (13) und der Haltestruktur (18) wenigstens abschnittsweise unverbunden mit der Dachplane (13) und wenigstens abschnittsweise unverbunden mit der Haltestruktur (18) vorgesehen sind,
**dadurch gekennzeichnet, dass** zwischen der wenigstens einen Haltestruktur (18) und der Dachplane (13) ein die wenigstens zwei Aussteifungselemente (16) wenigstens teilweise aufnehmender Funktionsraums (22) ausgebildet ist.

2. Schiebeverdeck nach Anspruch 1,
**dadurch gekennzeichnet, dass**
die Aussteifungselemente (16) zwischen der Dachplane (13) und der Haltestruktur (18) wenigstens abschnittsweise unverbunden mit der Dachplane (13) und wenigstens abschnittsweise unverbunden mit der Haltestruktur (18) vorgesehen sind.

3. Schiebeverdeck nach Anspruch 2,
**dadurch gekennzeichnet, dass**
die wenigstens zwei Aussteifungselemente (16) wenigstens zwischen der Dachplane (13) und der Haltestruktur (18) unverbunden mit der Dachplane (13) und/oder unverbunden mit der Haltestruktur (18) vorgesehen sind.

4. Schiebeverdeck nach einem der Ansprüche 1 bis 3,
**dadurch gekennzeichnet, dass**
die wenigstens zwei Aussteifungselemente (16) an ihren freien Enden gegenüber dem Funktionsraum (22) jeweils in Richtung eines der Längsholme (8) vorstehen und dass, vorzugsweise, der Funktionsraums (22) zwischen der wenigstens einen Haltestruktur (18) und der Dachplane (13) dazu ausgebildet ist, die wenigstens zwei Aussteifungselemente (16) nach der Ausbildung des Funktionsraums (22) durch den Funktionsraum (22) hindurchzuführen.

5. Schiebeverdeck nach einem der Ansprüche 1 bis 4,
**dadurch gekennzeichnet, dass**
die wenigstens zwei Aussteifungselemente (216) im Funktionsraum (22) zwischen der Dachplane (13) und der wenigstens einen Haltestruktur (18) wenigstens drei Aussteifungselemente (16), vorzugsweise wenigstens vier Aussteifungselemente (16), insbesondere wenigstens sechs Aussteifungselemente (16) sind.

6. Schiebeverdeck nach einem der Ansprüche 1 bis 5,
**dadurch gekennzeichnet, dass**
die Aussteifungselemente (16) Gurte, Fäden, Seile und/oder Drähte sind und/oder dass die Aussteifungselemente (16) wenigstens überwiegend, insbesondere wenigstens im Wesentlichen aus Polyerster gebildet sind.

7. Schiebeverdeck nach einem der Ansprüche 1 bis 6,
**dadurch gekennzeichnet, dass**
die wenigstens eine Haltestruktur (18) flächig, vorzugsweise großflächig, ausgebildet ist und/oder dass die wenigstens einen Haltestruktur (18) durch ein Netz, eine Folie und/oder eine Plane gebildet ist.

8. Schiebeverdeck nach einem der Ansprüche 1 bis 7,
**dadurch gekennzeichnet, dass**
die wenigstens eine Haltestruktur (18) sich wenigstens über 70 %, vorzugsweise über wenigstens 80 %, insbesondere über wenigstens 90 %, weiter insbesondere wenigstens im Wesentlichen über den gesamten Abstand zwischen den Längsholmen (8) erstreckt.

9. Schiebeverdeck nach einem der Ansprüche 1 bis 8,
**dadurch gekennzeichnet, dass**
die wenigstens eine Haltestruktur (18) sich in der geschlossenen Stellung des Dachs wenigstens über 20 %, vorzugsweise über wenigstens 30 %, insbesondere über wenigstens 50 %, weiter insbesondere über wenigstens 90 % der Längserstreckung des Laderaums (3) erstreckt.

10. Schiebeverdeck nach einem der Ansprüche 1 bis 9,
**dadurch gekennzeichnet, dass**
die wenigstens eine Haltestruktur (18) abschnittsweise mit der Dachplane (13) verschweißt, vernäht, verklebt, vernietet und/oder verschraubt ist.

11. Schiebeverdeck nach Anspruch 10,
**dadurch gekennzeichnet, dass**
die wenigstens eine Haltestruktur (18) im Bereich und/oder zusammen mit Riemenhalteplatten (17) mit der Dachplane (13) verschweißt, vernäht, verklebt, vernietet und/oder verschraubt ist und dass, vorzugsweise, die Riemenplatten (17) jeweils über einem Riemen (21) mit einem Spriegel (14) verbunden sind.

12. Schiebeverdeck nach einem der Ansprüche 1 bis 9,
**dadurch gekennzeichnet, dass**
sich die Aussteifungselemente (16) in einem Winkel zwischen 15° und 75°, vorzugsweise zwischen 25° und 65°, insbesondere zwischen 35° und 55° zu den Längsholmen (8) erstrecken.

13. Planenaufbau (1) eines Nutzfahrzeugs (N), vorzugsweise Lastkraftwagen, Anhänger oder Sattelauflieger, mit einem Schiebeverdeck (7) zum Aufschieben in eine das Dach (6) zum Be- und Entladen freigebende geöffnete Stellung und zum Zuschieben in eine das Dach (6) verschließende geschlossene Stellung.
**dadurch gekennzeichnet, dass**
das Schiebeverdeck (7) nach einem der Ansprüche 1 bis 12 ausgebildet ist.
